# FASCICULE DE BREVET EUROPEEN

(11) **EP 2 739 693 B1**
(45) Date de publication et mention de la délivrance du brevet: **16.09.2015**
(21) Numéro de dépôt: 12740554.6
(22) Date de dépôt: 19.07.2012
(51) Int. Cl.: C09J 121/02, C09J 161/06, C09J 161/18

(54) **COMPOSITION ADHESIVE AQUEUSE A BASE DE POLYALDEHYDE ET DE POLYPHENOL**
WÄSSRIGE KLEBSTOFFZUSAMMENSETZUNG AUF DER BASIS VON POLYALDEHYD UND POLYPHENOL
AQUEOUS ADHESIVE COMPOSITION BASED ON POLYALDEHYDE AND POLYPHENOL

(30) Priorité: 04.08.2011 FR 1157155
(43) Date de publication de la demande: 11.06.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: DOISNEAU, David, F-63040 Clermont-Ferrand cedex 9 (FR); DECORPS, Hélène, F-63040 Clermont-Ferrand cedex 9 (FR)
(74) Mandataire: Desbordes, Guillaume
(86) Numéro de dépôt international: PCT/EP2012/064200
(87) Numéro de publication internationale: WO 2013/017421

(56) Documents cités:
- FR-A- 929 407

## Description

Le domaine de la présente invention est celui des matériaux textiles et des compositions adhésives ou « colles » destinées à faire adhérer de tels matériaux textiles à des matrices de caoutchouc insaturé telles que celles utilisées couramment dans les articles ou produits semi-finis en caoutchouc.

La présente invention est plus particulièrement relative à des matériaux textiles encollés par des couches adhésives à base d'une résine phénol-aldéhyde, notamment à des matériaux textiles encollés susceptibles de renforcer des structures de pneumatiques.

Il est connu de très longue date de faire adhérer des matériaux textiles à des compositions d'élastomère diénique grâce à l'utilisation de colles connues sous la dénomination « RFL » (pour résorcinol-formaldéhyde-latex), par exemple pour le collage de compositions de caoutchouc sur des câblés textiles en polyester ou en polyamide tels que ceux usuellement utilisés dans les pneumatiques (voir par exemple US 2 561 215, US 3 817 778). Ces colles RFL comprennent de manière bien connue une résine phénolique thermodurcissable, obtenue par la condensation du résorcinol avec le formaldéhyde, et un ou plusieurs latex de caoutchouc diénique en solution aqueuse.

L'expérience montre que les colles RFL ci-dessus confèrent une excellente adhésion des matériaux textiles aux compositions de caoutchouc réticulable.

Toutefois, ces colles RFL ne sont pas dépourvues d'inconvénient ; elles comportent en particulier comme substance de base le formaldéhyde (ou formol) qu'il est souhaitable de diminuer, voire de supprimer à terme des compositions adhésives, en raison de l'évolution récente de la réglementation européenne sur ce type de composé.

Ainsi, les concepteurs d'articles en caoutchouc, notamment les manufacturiers de pneumatiques, ont pour objectif aujourd'hui de trouver de nouveaux systèmes adhésifs ou de nouveaux matériaux textiles qui permettent de pallier l'inconvénient précité.

Or, au cours de leurs recherches, les Demanderesses ont découvert une composition adhésive aqueuse n'utilisant pas de formol qui permet de répondre à l'objectif ci-dessus.

Ainsi, un premier objet de l'invention concerne une composition adhésive aqueuse comportant au moins d'une part A) une résine phénol-aldéhyde et d'autre part B) un latex d'élastomère insaturé, caractérisée en ce que la résine phénol-aldéhyde est à base d'au moins :
∘ un polyaldéhyde aromatique porteur d'au moins deux fonctions aldéhyde, comprenant au moins un noyau aromatique;
∘ un polyphénol comportant un ou plusieurs noyau(x) aromatique(s), étant entendu que :
   - dans le cas d'un seul noyau aromatique, ce dernier est porteur de deux ou trois fonctions hydroxyle en position méta l'une par rapport à l'autre ou les unes par rapport aux autres, le reste du noyau aromatique étant non substitué ;
   - dans le cas de plusieurs noyaux aromatiques, au moins deux d'entre eux sont chacun porteur de deux ou trois fonctions hydroxyle en position méta l'une par rapport à l'autre ou les unes par rapport aux autres, étant entendu que les deux positions en ortho d'au moins une de ces fonctions hydroxyle sont non substituées.

Un autre objet de l'invention concerne l'utilisation de la composition adhésive aqueuse selon l'invention pour faire adhérer par cuisson un matériau textile à une composition de caoutchouc réticulable, ainsi qu'un matériau textile dont au moins une partie est revêtue d'une couche adhésive, caractérisé en ce que ladite couche comporte une composition adhésive aqueuse selon l'invention.

L'invention concerne également un procédé de fabrication d'un matériau textile selon l'invention, caractérisé en ce qu'il comporte au moins une étape de dépôt sur un matériau textile de départ, d'une composition adhésive conforme à l'invention.

L'invention concerne également l'utilisation du matériau textile de l'invention comme élément de renforcement d'articles ou produits semi-finis en caoutchouc, particulièrement de bandages pneumatiques, notamment ceux destinés à équiper des véhicules à moteur de type tourisme, SUV (*"Sport Utility Vehicles"*), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention concerne également en soi tout composite (article ou produit semi-fini) en caoutchouc, en particulier tout pneumatique, avant comme après cuisson (pour réticulation ou vulcanisation finale), comportant un matériau textile selon l'invention.

L'invention ainsi que ses avantages seront aisément compris à la lumière de la description et des exemples de réalisation qui suivent.

### I - FORMULATION DE LA COMPOSITION ADHESIVE AQUEUSE

Dans la présente description, sauf indication expresse différente, tous les pourcentages (%) indiqués sont des % en masse.

Par élastomère (ou indistinctement caoutchouc) "diénique", on entend un élastomère issu au moins en partie (c'est-à-dire un homopolymère ou un copolymère) de monomère(s) diène(s) (i.e., porteur(s) de deux doubles liaisons carbone-carbone, conjuguées ou non). Par "élastomère isoprénique", on entend un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par l'expression « composition à base de », il faut bien entendu comprendre une composition comportant le mélange et/ou le produit de réaction des différents constituants de base utilisés pour cette composition, certains d'entre eux pouvant être destinés à réagir ou susceptibles de réagir entre eux ou avec leur environnement chimique proche, au moins en partie, lors des différentes phases de fabrication de la composition, du matériau textile, des composites ou articles finis comportant de tels composites, en particulier au cours d'une étape de cuisson.

La composition adhésive aqueuse selon l'invention comprend donc au moins d'une part A) une (au moins une) résine phénol-aldéhyde et d'autre part B) un (au moins un) latex d'élastomère insaturé ; cette résine phénol-aldéhyde est quant à elle à base d'au moins un (c'est-à-dire un ou plusieurs) polyaldéhyde aromatique et au moins un (c'est-à-dire un ou plusieurs) polyphénol, constituants qui vont être décrits en détail ci-après.

### I.1 - Polyaldéhyde aromatique

Le premier constituant essentiel de la résine phénol-aldéhyde est un polyaldéhyde aromatique porteur d'au moins deux fonctions aldéhydes, comprenant au moins un noyau aromatique. Selon un mode de réalisation préférentiel, c'est ledit noyau aromatique qui est porteur des fonctions aldéhyde, ces dernières pouvant être en position ortho, méta ou para sur le noyau aromatique.

Préférentiellement le noyau aromatique du polyaldéhyde est un noyau benzénique. Plus préférentiellement, ce polyaldéhyde est choisi dans le groupe constitué par le 1,2-benzène-dicarboxaldéhyde, le 1,3-benzène-dicarboxaldéhyde, le 1,4-benzène-dicarboxaldéhyde, le 2-hydroxybenzène-1, 3,5-tricarbaldéhyde, et les mélanges de ces composés.

Encore plus préférentiellement le polyaldéhyde aromatique utilisé est le 1,4-benzène-dicarboxaldéhyde, encore appelé téréphtaldéhyde, pour rappel de formule chimique développée :

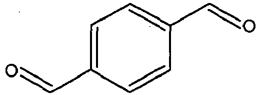

### I.2 - Polyphénol

Le deuxième constituant essentiel de la résine phénol-aldéhyde est un polyphénol comportant un ou plusieurs noyau(x) aromatique(s).

Dans le cas d'un polyphénol comportant un seul noyau aromatique, ce dernier est porteur de deux ou trois fonctions hydroxyle en position méta l'une par rapport à l'autre (dans le cas de deux fonctions) ou les unes par rapport aux autres (dans le cas de trois fonctions), le reste du noyau aromatique étant par définition non substitué ; on entend par là que les autres atomes de carbone du reste du noyau aromatique (ceux autres que les atomes de carbone porteurs des fonctions hydroxyle) sont porteurs d'un simple atome d'hydrogène.

A titre d'exemple préférentiel de polyphénol comportant un seul noyau aromatique, on peut citer en particulier le résorcinol, pour rappel de formule développée :

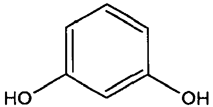

Dans le cas d'un polyphénol comportant plusieurs (deux ou plus de deux) noyaux aromatiques, au moins deux d'entre eux sont chacun porteur de deux ou trois fonctions hydroxyle en position méta l'une par rapport à l'autre (dans le cas de deux fonctions), ou les unes par rapport aux autres (dans le cas de trois fonctions), étant entendu que les deux positions en ortho d'au moins une de ces fonctions hydroxyle sont non substituées; on entend par là que les deux atomes de carbone situés de part et d'autre (en position ortho) de l'atome de carbone hydroxylé (i.e., porteur de la fonction hydroxyle) sont porteurs d'un simple atome d'hydrogène.

A titres d'exemples préférentiels, dans le cas où la molécule de polyphénol comporte plusieurs noyaux aromatiques, au moins deux de ces noyaux aromatiques, identiques ou différents, sont choisis parmi ceux de formules générales : 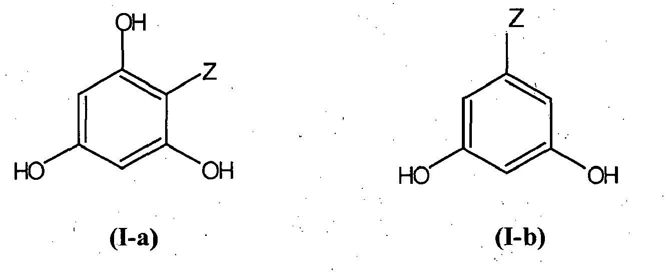 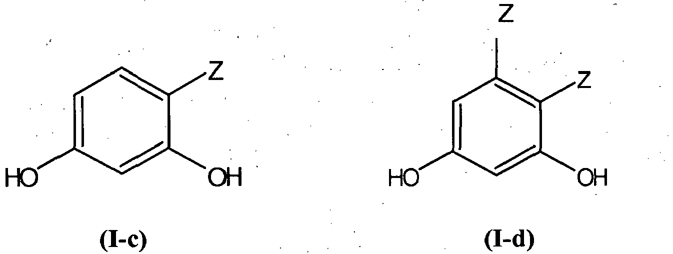 dans lesquelles les symboles Z, identiques ou différents s'ils sont plusieurs sur le même noyau aromatique, représentent un atome (par exemple carbone, soufre ou oxygène) ou un groupe de liaison par définition au moins divalent, qui relie au moins ces deux noyaux aromatiques au reste de la molécule polyphénol.

Selon un mode de réalisation particulier et préférentiel de l'invention, le polyphénol est par exemple un flavonoïde, caractérisé pour rappel par une structure de base à 15 atomes de carbone, formée par deux cycles benzéniques reliés par trois atomes de carbone. Plus particulièrement, le flavonoïde utilisé est le 2',4',3, 5, 7-pentahydroxyflavone, appelé aussi « Morin », de formule (II) ci-après :

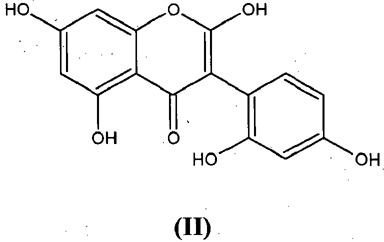

On note que ce composé est un polyphénol comportant deux noyaux aromatiques (de formules respectives I-c et I-d ci-dessus) dont chacun est bien porteur de deux fonctions hydroxyle en position méta l'une par rapport à l'autre, les deux positions en ortho d'au moins une de ces deux fonctions hydroxyle étant non substituées.

Selon un autre mode de réalisation particulier et préférentiel de l'invention, le polyphénol est par exemple le phloroglucide, encore appelé 2, 4, 6, 3', 5'-biphénylpentol, de formule développée suivante :

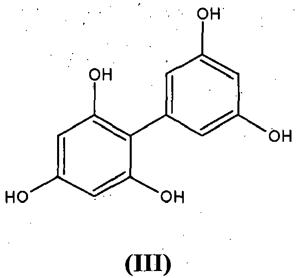

On note que ce composé est un polyphénol comportant deux noyaux aromatiques (de formules respectives I-a et I-b ci-dessus) dont chacun est bien porteur d'au moins deux (en l'occurrence, un porteur de deux, l'autre porteur de trois) fonctions hydroxyle en position méta l'une par rapport à l'autre, les deux positions en ortho d'au moins une de ces deux fonctions hydroxyle étant non substituées.

### I.3 - Latex d'élastomère insaturé

On rappelle qu'un latex est une dispersion stable de microparticules d'élastomère(s) en suspension dans une solution aqueuse.

Les latex d'élastomère insaturé (c'est-à-dire porteur de doubles liaisons carbone-carbone), notamment d'élastomère diénique, sont bien connus de l'homme du métier. Ils constituent notamment la base élastomérique des colles RFL décrites en introduction du présent mémoire.

Conformément à l'invention, l'élastomère insaturé du latex est préférentiellement un élastomère diénique, plus préférentiellement un élastomère diénique choisi dans le groupe constitué par les polybutadiènes, les copolymères de butadiène, les polyisoprènes, les copolymères d'isoprène et les mélanges de ces élastomères. Il est encore plus préférentiellement choisi dans le groupe constitué par les copolymères de butadiène, les terpolymères vinylpyridine-styrène-butadiène, le caoutchouc naturel, et les mélanges de ces élastomères.

### I.4 - Additifs - Fabrication de la composition adhésive aqueuse

La composition adhésive aqueuse conforme à l'invention et/ou sa résine phénol-aldéhyde et /ou son latex d'élastomère insaturé de départ, peuvent bien entendu comporter tout ou partie des additifs habituels pour compositions adhésives aqueuses telles que ceux utilisés dans les colles RFL conventionnelles ; on citera par exemple des bases telles que ammoniaque, hydroxyde de sodium, de potassium ou d'ammonium, des colorants, charges telles que noir de carbone ou silice, antioxydants ou autre stabilisants.

Typiquement, lors d'une première étape de fabrication, on prépare la résine elle-même en mélangeant progressivement le polyphénol et le polyaldéhyde aromatique dans un solvant basique tel qu'une solution aqueuse de soude, ayant de préférence un pH compris entre 9 et 13, plus préférentiellement entre 10 et 12. L'ensemble des constituants est mélangé sous agitation pendant un temps variable selon la température utilisée et la composition spécifique visée, par exemple pendant une durée pouvant varier entre 1 min et 6 h, à une température comprise entre 20°C et 90°C, préférentiellement entre 20 et 60°C.

Le rapport pondéral de polyphénol sur polyaldéhyde est préférentiellement compris entre 0,1 et 3, plus préférentiellement entre 0,25 et 2.

La résine phénol-aldéhyde ainsi précondensée est généralement diluée dans l'eau, avant d'être ajoutée au latex ou aux latex (s'ils sont plusieurs) d'élastomère(s) insaturé(s) pour constituer la composition adhésive aqueuse de l'invention, selon un mode opératoire général qui est bien connu de l'homme du métier dans le domaine des colles RFL.

Par exemple, les constituants de la composition adhésive sont ajoutés dans l'ordre suivant : l'eau, d'éventuels additifs solubles dans l'eau (par exemple ammoniaque), le ou les latex (peu importe l'ordre), la résine phénol-aldéhyde (diluée). L'ensemble est mélangé sous agitation pendant 1 à 30 min, par exemple à 20°C.

Lors d'une dernière étape de fabrication, la composition adhésive aqueuse est généralement stockée à température ambiante (23°C) pendant un temps de maturation pouvant varier typiquement de 1 à plusieurs heures voire plusieurs jours, avant son utilisation finale.

Dans la composition adhésive finale ainsi préparée, le taux d'extrait sec de résine phénol-aldéhyde représente de préférence entre 5 et 60 %, plus préférentiellement entre 10 et 30 % en poids de l'extrait sec de composition adhésive.

Le taux d'élastomère insaturé (c'est-à-dire l'extrait sec du ou des latex) est quant à lui compris de préférence entre 40 et 95 %, plus préférentiellement entre 70 et 90 %, en poids de l'extrait sec de la composition adhésive.

Le rapport pondéral de l'extrait sec de résine sur l'extrait sec de latex est de préférence compris entre 0,1 et 2,0, plus préférentiellement entre 0,15 et 1,0.

La teneur en eau de la composition adhésive aqueuse de l'invention est de préférence comprise entre 60 et 90 %, plus préférentiellement entre 60 et 85 %.

### II - MATERIAU TEXTILE ET COMPOSITE DE L'INVENTION

Comme indiqué précédemment, la présente invention concerne également l'utilisation de la composition adhésive aqueuse précédemment décrite pour le collage de tout matériau textile à une composition de caoutchouc insaturé, pour formation d'un composite de caoutchouc renforcé d'un tel matériau, ainsi que, en tant que tel, le matériau textile dont au moins une partie est revêtue d'une composition adhésive selon l'invention.

### II.1 - Définitions ; exemples de matériaux textiles

Par définition, dans là présente demande, on entend par « textile » ou « matériau textile », de manière bien connue de l'homme du métier, tout matériau en matière autre que métallique, qu'elle soit naturelle comme synthétique, susceptible d'être transformée en fil, fibre ou film par tout procédé de transformation approprié. On peut citer par exemple, sans que les exemples ci-après soient limitatifs, un procédé de filage de polymère tel que par exemple filage au fondu, filage en solution ou filage de gel.

Ce matériau textile peut consister en un fil ou fibre, un ruban ou film, ou également en un tissu réalisé à partir de fils ou fibres, par exemple d'un tissu tramé avec fils de chaîne et fils de trame, ou encore d'un tissu croisé avec fils croisés.

De préférence, ce matériau textile de l'invention est choisi dans le groupe constitué par les films, les mono filaments (ou fils unitaires), les fibres multifilamentaires, les assemblages de tels fils ou fibres, et les mélanges de tels matériaux. Il s'agit plus particulièrement d'un monofilament, d'une fibre multifilamentaire ou d'un retors.

Par « fil » ou « fibre », on entend de manière générale tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé. La plus grande dimension de sa section transversale est préférentiellement inférieure à 5 mm, plus préférentiellement inférieur à 3 mm.

Ce fil ou cette fibre peut prendre tout forme connue, il peut d'agir par exemple d'un monofilament élémentaire de diamètre important (par exemple et de préférence égal ou supérieur à 50 µm), d'une fibre multifilamentaire (constituée d'une pluralité de filaments élémentaires de faible diamètre, typiquement inférieur à 30 µm), d'un retors ou câblé textile formé de plusieurs fibres ou monofilaments textiles retordus ou câblés ensemble, ou encore d'un assemblage, un groupe, une rangée de fils ou fibres tels que par exemple une bande ou bandelette comportant plusieurs de ces monofilaments, fibres, retors ou câblés regroupés ensemble, par exemple alignés selon une direction principale, rectiligne ou pas.

Par « film » ou « ruban », on entend de manière générale un élément longiligne, de grande longueur relativement à sa section transversale, dont la section transversale présente un rapport de forme (largeur sur épaisseur) supérieur à 5, de préférence supérieur à 10, et dont la largeur est préférentiellement au moins égale à 3 mm, plus préférentiellement au moins égale à 5 mm.

La composition adhésive aqueuse de l'invention peut être appliquée à tout matériau textile tel que décrit ci-dessus et susceptible de renforcer des articles en caoutchouc tels que des pneumatiques, incluant les matériaux textiles en matière organique ou polymérique, comme en matière inorganique.

A titre d'exemples de matières inorganiques, on citera le verre, le carbone.

L'invention est préférentiellement mise en oeuvre avec des matériaux en matière polymérique, du type thermoplastique comme non thermoplastique.

A titre d'exemples de matières polymériques du type non thermoplastiques, on citera par exemple l'aramide (polyamide aromatique) et la cellulose, naturelle comme artificielle, telle que le coton, la rayonne, le lin, le chanvre.

A titre d'exemples de matières polymériques du type thermoplastiques, on citera préférentiellement les polyamides aliphatiques et les polyesters. Parmi les polyamides aliphatiques, on peut citer notamment les polyamides 4-6, 6, 6-6, 11 ou 12. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate).

### II.2 - Fabrication du matériau textile et du composite

Le matériau textile de l'invention peut être préparé selon un procédé d'encollage caractérisé en ce qu'il comporte au moins une étape de dépôt, sur le matériau textile de départ (initial), d'une composition adhésive conforme à l'invention.

L'étape de dépôt de la composition adhésive sur le matériau textile initial (matériau textile de départ) peut être réalisée selon toute méthode appropriée, notamment par toute technique d'enduction connue telle que par exemple pulvérisation, imprégnation par trempage, défilement dans un bain ou autre technique équivalente de dépôt de film de colle mince ou ultra-mince, ou encore par une combinaison d'une ou plusieurs de ces techniques.

Le poids d'extrait sec de la composition adhésive aqueuse déposée sur un kilogramme de matériau textile est de préférence compris entre 5 et 100 g, plus préférentiellement entre 30 et 70 g, encore plus préférentiellement entre 40 et 60 g.

L'invention s'applique également aux cas où le matériau textile de départ a été préadhérisé par un primaire d'adhésion tel que ceux couramment utilisés par l'homme du métier pour le pré-encollage de certaines fibres textiles (e.g. fibres en PET ou en aramide). Les fibres ainsi préadhérisées subissent ensuite un encollage ultérieur et définitif avec la composition adhésive aqueuse selon l'invention.

Après l'étape précédemment décrite de dépôt de la composition adhésive, le matériau encollé subit un premier traitement thermique visant à éliminer tout solvant ou eau, à une température comprise de préférence entre 110°C et 260°C, plus préférentiellement entre 130°C et 250°C, par exemple par traversée d'un four-tunnel, typiquement de plusieurs mètres de long, tels que ceux utilisés couramment pour le traitement thermique après encollage des matériaux textiles par une colle RFL.

L'invention concerne également le matériau textile obtenu après séchage, c'est-à-dire après un traitement thermique visant à éliminer l'eau, du matériau textile selon l'invention dont au moins une partie est revêtue d'une couche adhésive comportant une composition adhésive selon l'invention.

Puis, le matériau anhydre ainsi obtenu subit un second traitement thermique pour terminer la réticulation de la composition adhésive, préférentiellement conduit à l'air dans un four tunnel tel que décrit ci-dessus. La température de traitement est de préférence comprise entre 150°C et 350°C. Les durées de traitement sont de quelques secondes à quelques minutes selon les cas (par exemple entre 10 s et 10 min).

L'homme du métier saura ajuster, le cas échéant, la température et la durée du traitement thermique ci-dessus, en fonction des conditions particulières de mise en oeuvre de l'invention, notamment de la nature exacte du matériau textile fabriqué, en particulier selon que l'on traite des monofilaments, des fibres multifilamentaires, des retors constitués de plusieurs fibres retordues ensemble, ou des films. En particulier, l'homme du métier aura avantage à réaliser des balayages en température et durée de traitement, de manière à rechercher, par approches successives, les conditions opératoires conduisant aux meilleurs résultats d'adhésion, pour chaque mode de réalisation particulier de l'invention.

Ainsi encollé, le matériau textile de l'invention est préférentiellement destiné à adhérer à une composition de caoutchouc insaturé tel qu'un caoutchouc diénique, pour former un composite de caoutchouc renforcé qui constitue un autre objet de l'invention.

Ce composite de caoutchouc de l'invention peut être préparé selon un procédé comportant au moins les étapes suivantes :
- au cours d'une première étape, combiner au moins une portion du matériau textile selon l'invention avec une composition de caoutchouc insaturé (réticulable), pour former un composite de caoutchouc renforcé du matériau textile ;
- puis, au cours d'une deuxième étape, réticuler par cuisson, de préférence sous pression, le composite ainsi formé.

L'invention s'applique donc à tout type de composite de caoutchouc susceptible d'être obtenu par le procédé précédemment décrit, comportant au moins une matrice en composition de caoutchouc réticulable, notamment de caoutchouc diénique, liée au matériau textile via une interphase adhésive à base de la composition adhésive selon l'invention.

L'élastomère diénique du composite est préférentiellement choisi dans le groupe constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène-styrène (SIR), les copolymères de butadiène-styrène-isoprène (SBIR) et les mélanges de ces élastomères. Un mode de réalisation préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. L'élastomère isoprénique est de préférence du caoutchouc naturel ou un polyisoprène de synthèse du type cis-1,4.

### II.3 - Application en pneumatiques

Le matériau textile de l'invention est avantageusement utilisable pour le renforcement de pneumatiques de tous types de véhicules, en particulier véhicules tourisme ou véhicules industriels tels que Poids-lourd.

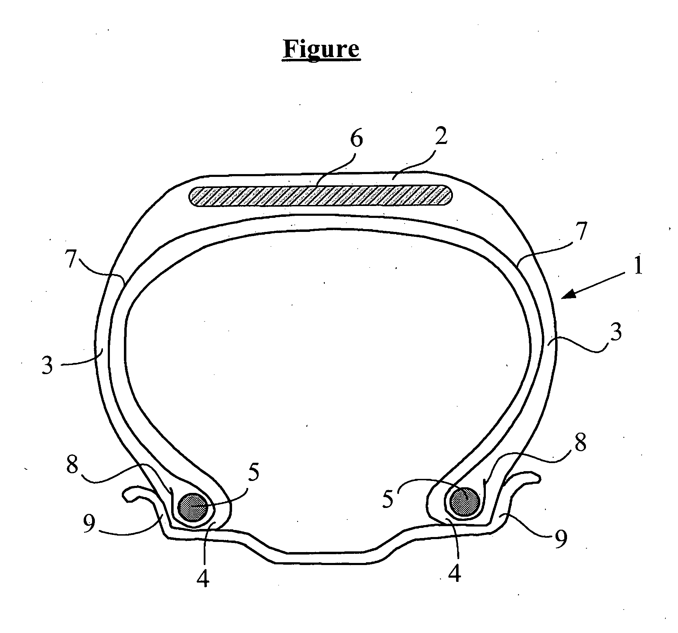

A titre d'exemple, la figure unique annexée représente de manière très schématique (sans respect d'une échelle spécifique), une coupe radiale d'un pneumatique conforme à l'invention pour véhicule du type tourisme.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Ce pneumatique 1 de l'invention a par exemple pour caractéristique essentielle qu'au moins une armature de sommet (6) et/ou son armature de carcasse (7) comporte un matériau textile selon l'invention. Selon un autre exemple de mode de réalisation possible de l'invention, ce sont par exemple les tringles (5) qui pourraient être constituées, en tout ou partie, d'un matériau textile selon l'invention.

Bien entendu, l'invention concerne les objets précédemment décrits, à savoir le matériau textile et le composite en caoutchouc tel que pneumatique le comportant, tant à l'état cru (avant cuisson ou vulcanisation) qu'à l'état cuit (après cuisson).

### III - EXEMPLES DE REALISATION DE L'INVENTION

### III.1 - Essai 1 : Adhésion de câblés textiles polyamide

Ces essais démontrent que l'adhésion à une composition d'élastomère diénique, de câblés textiles polyamide encollés avec une composition adhésive aqueuse selon l'invention, est équivalente voire même améliorée dans certains cas, par rapport à des câblés encollés avec une composition adhésive conventionnelle du type RFL.

Pour cela, quatre compositions adhésives aqueuses ont été préparées comme indiqué précédemment, trois conformément à l'invention (notées ci-après C-1.2 à C-1.4) et une non conformément à l'invention (composition témoin notée ci-après C-1.1). Leurs formulations (exprimées en pourcentage en poids) sont présentées dans le tableau 1 annexé. Les quantités répertoriées dans ce tableau sont celles des constituants à l'état sec, ramenées à un total de 100 parties en poids de composition adhésive aqueuse (c'est-à-dire les constituants plus l'eau).

La composition adhésive C-1.1 est une composition témoin, de type RFL, couramment utilisée pour l'adhésion de câblés polyamide à une composition de caoutchouc. Cette composition adhésive est à base de résorcinol et de formol.

La composition adhésive aqueuse C-1.2 selon l'invention est à base de Morin et de 1,4-benzènedicarboxaldéhyde.

Les compositions adhésives aqueuses C-1.3 et C-1.4 selon l'invention sont à base de phloroglucide et respectivement de 1,4-benzènedicarboxaldéhyde, et de 1,3-benzènedicarboxaldéhyde.

Ces compositions adhésives C-1.1 à C-1.4 sont par ailleurs toutes à base de latex de caoutchouc naturel (NR), latex de copolymère styrène-butadiène (SBR) et de latex de vynilpyridine-styrène-butadiène (VPSBR).

Les câblés en polyamide (polyamide-6,6) consistent en des retors à deux brins de construction 140x2 (titre de chaque brin égal à 140 tex) et 250/250 (torsion en t/m) ; ils ont été encollés avec chacune de ces 4 compositions adhésives aqueuses C-1.1 à C-1.4, puis séchés dans un four de séchage à 180°C pendant 60s. Puis la composition adhésive a été réticulée par passage des câblés textiles dans un four de traitement à 230°C pendant 60 s. Puis l'ensemble a été solidarisé par cuisson à une composition de caoutchouc naturel, grâce à un traitement thermique de vulcanisation, pour former des éprouvettes de composites comme décrit ci-après.

La qualité de la liaison entre la composition de caoutchouc et le matériau textile est ensuite déterminée par un test dans lequel on mesure la force nécessaire pour extraire des tronçons de câblés en matière textile, de la composition de caoutchouc vulcanisée. Cette composition de caoutchouc est une composition conventionnelle utilisable pour le calandrage de nappes textiles d'armature carcasse de pneumatique, à base de caoutchouc naturel, de noir de carbone et des additifs usuels.

Plus précisément, le vulcanisat est un bloc de caoutchouc constitué de deux plaques de dimensions 200 mm par 4,5 mm et d'épaisseur 3,5 mm, appliquées l'une sur l'autre avant cuisson (l'épaisseur du bloc résultant est alors de 7 mm). C'est lors de la confection de ce bloc que les câblés textiles (15 tronçons au total) sont emprisonnés entre les deux plaques de caoutchouc à l'état cru, à égale distance et en laissant dépasser de part et d'autre de ces plaques une extrémité de câblé de longueur suffisante pour la traction ultérieure. Le bloc comportant les câblés est alors placé dans un moule adapté puis cuit sous pression. La température et la durée de cuisson sont adaptées aux conditions de tests visées et laissées à l'initiative de l'homme de l'art ; à titre d'exemple, dans le cas présent, la cuisson du bloc est réalisée à 160°C pendant 15 min.

A l'issue de la cuisson, l'éprouvette ainsi constituée du bloc vulcanisé et des 15 tronçons de câblés est mise en place dans les mâchoires d'une machine de traction adaptée pour permettre de tester chaque tronçon isolément, à une vitesse et une température données (par exemple, dans le cas présent, à 100 mm/min et 20°C ou 120°C).

On caractérise les niveaux d'adhésion en mesurant la force dite d'arrachage (notée Fₘₐₓ) pour arracher les renforts de l'éprouvette. Une valeur supérieure à celle de l'éprouvette témoin, arbitrairement fixée à 100, indique un résultat amélioré, c'est-à-dire une force d'arrachage supérieure à celle de l'éprouvette témoin. Les résultats des tests effectués sur les éprouvettes sont résumés dans le tableau 1.

On constate que les câblés textiles encollés avec les compositions adhésives C-1.2 et C-1.4 selon l'invention présentent une force d'arrachage Fₘₐₓ particulièrement élevée et inattendue pour l'homme du métier, puisque très sensiblement augmentée (entre 14% et 20 %) à température ambiante (20°C) comme à haute température (120°C), par rapport à la force d'arrachage de référence mesurée sur le câblé textile témoin encollé avec la colle « RFL » conventionnelle. Quant aux câblés textiles encollés avec la composition C-1.3, ils présentent une force d'arrachage Fₘₐₓ certes inférieure mais significative et suffisante pour l'homme du métier, comparée à celle mesurée sur le câblé textile témoin encollé avec cette colle RFL.

### III.2 - Essai 2 : Adhésion de câblés PET

Les essais qui suivent ont pour but de démontrer l'obtention d'une adhésion satisfaisante entre des câblés polyester (PET) encollés avec une composition adhésive aqueuse selon l'invention et une composition d'élastomère diénique, par rapport à un câblé témoin encollé avec une composition adhésive conventionnelle du type RFL.

Dans le cas de câblés PET, il est connu de procéder à leur préadhérisation dans un premier bain généralement à base d'époxy en solution aqueuse, par exemple à base de polyglycérol polyglycidyl éther. Les ingrédients sont introduits dans l'eau sous agitation, par exemple dans l'ordre suivant : 0,5 pourcent en poids de polyglycérol polyglycidyl éther (par exemple «Denacol EX-512 » de Nagase Chemicals), 0,03 pourcent en poids de tensioactif (dioctyl sulfosuccinate de sodium commercialisé sous le nom « AOT 75 ») et 0,03 pourcent en poids de soude, 99,44 pourcents en poids d'eau.

Les câblés PET de ces exemples consistent en des retors à deux brins de construction 144x2 (titre de chaque brin égal à 144 tex) et 420/420 (torsion en t/m) ; ainsi préadhérisés, ils sont ensuite encollés avec des compositions adhésives aqueuses selon l'invention et une composition témoin, puis séchés dans un four de séchage à 140 °C pendant 30 s. Puis la composition adhésive a été réticulée par passage des câblés textiles dans un four de traitement à 240 °C pendant 30 s. Puis ils ont été solidarisés par cuisson à une composition de caoutchouc naturel, comme précédemment pour les câblés en polyamide, grâce à un traitement thermique de vulcanisation, pour former des éprouvettes de composites.

Pour ces essais, trois compositions adhésives aqueuses ont été préparées comme indiqué précédemment, deux conformément à l'invention (notées ci-après C-2.2 et C-2.3) et une non conformément à l'invention (composition témoin notée ci-après C-2.1). Leurs formulations (exprimées en pourcentage en poids) sont présentées dans le tableau 2 annexé. Les quantités répertoriées dans ce tableau sont celles des constituants à l'état sec, ramenées à un total de 100 parties en poids de composition adhésive aqueuse (c'est-à-dire les constituants plus l'eau).

La composition adhésive C-2.1 est une composition témoin, de type RFL, couramment utilisée pour faire adhérer des fibres PET à une composition de caoutchouc, à base de résorcinol et de formol.

La composition adhésive aqueuse C-2.2 selon l'invention est à base de Morin et de 1,4-benzénedicarboxaldéhyde.

La composition adhésive aqueuse C-2.3 selon l'invention est à base de phloroglucide et de 1,3-benzénedicarboxaldéhyde.

Comme précédemment, ces compositions adhésives C-2.1 à C-2.3 sont par ailleurs toutes à base de latex de NR, SBR et vynilpyridine-styrène-butadiène.

Les résultats des tests d'adhésion (tels que décrits au paragraphe III.1 précédent) effectués sur les éprouvettes confectionnées respectivement avec les compositions adhésives C-2.1 à C-2.3 sont résumés dans le tableau 2.

La force d'arrachage (Fₘₐₓ) pour les câblés selon l'invention encollés avec les compostions adhésives C-2.2 et C-2.3 selon l'invention, présentent certes une valeur légèrement inférieure, aussi bien à 20°C qu'à 120 °C, à celle du câble témoin encollé RFL (arbitrairement fixée à 100). Toutefois ces résultats sont tout à fait acceptables pour assurer un collage satisfaisant de câblés textiles de type PET à une composition d'élastomère diénique.

En conclusion, les résultats de ces différents essais démontrent clairement que les compositions adhésives selon l'invention constituent une alternative fort intéressante à l'emploi des colles RFL conventionnelles.

**Tableau 1**

| **Compositions adhésives** | **C-1.1** | **C-1.2** | **C-1.3** | **C-1.4** |
|---|---|---|---|---|
| Aldéhyde : | | | | |
| Formaldéhyde (1) | 0.9 | - | - | - |
| 1,3-benzènedicarboxaldéhyde (2) | - | - | - | 1.3 |
| 1,4-benzènedicarboxaldéhyde (3) | - | 1.2 | 1.3 | - |
| Polyphénol : | | | | |
| Résorcinol (4) | 1.7 | - | - | - |
| Morin (5) | - | 1.4 | - | - |
| Phloroglucide (6) | - | - | 1.2 | 1.3 |
| Hydroxyde de sodium (7) | 0.2 | 0.2 | 0.2 | 0.2 |
| Latex d'élastomères : | | | | |
| NR (8) | 6.4 | 6.4 | 6.4 | 6.4 |
| SBR (9) | 3.2 | 3.2 | 3.2 | 3.2 |
| VP-SBR (10) | 6.4 | 6.4 | 6.4 | 6.4 |
| Ammoniaque (11) | 0.5 | 0.5 | 0.5 | 0.5 |
| | | | | |
| Poids total d'extrait sec de composition adhésive | 19.3 | 19.3 | 19.3 | 19.3 |
| Poids d'eau | 80.7 | 80.7 | 80.7 | 80.7 |
| | | | | |

| **Tests d'adhésion** | | | | |
|---|---|---|---|---|
| Fₘₐₓ à 20°C | 100 | 120 | 88 | 114 |
| Fₘₐₓ à 120 °C | 100 | 116 | 84 | 119 |

| | | | | |
|---|---|---|---|---|
| (1) Formol (de la société Caldic ; dilué à 36%) ; (2) 1,3-benzènedicarboxaldéhyde (de la société ABCR ; de pureté 98%) ; (3) 1,4-benzènedicarboxaldéhyde (de la société ABCR ; de pureté 98%) ; (4) Résorcinol (de la société Sumitomo ; de pureté 99.5%) ; (5) Morin (de la société Fluka) ; (6) Phloroglucide (de la société Alfa Aesar ; de pureté 95%) ; (7) Hydroxyde de sodium (de la société Aldrich ; dilué à 30%) ; (8) Latex NR (« Trang Latex » de la société Bee tex ; dilué à 61% en poids) ; (9) Latex SBR (« Encord-201 » de la société Jubilant ; dilué à 41% en poids) ; (10) Latex Vinylpyridine-styrène-butadiène («VP 106S» de la société Eliokem ; dilué à 41%) ; (11) Ammoniaque (de la société Aldrich ; diluée à 21 %). | | | | |

**Tableau 2**

| **Compositions adhésives :** | **C-2.1** | **C-2.2** | **C-2.3** |
|---|---|---|---|
| Aldéhyde : | | | |
| Formaldéhyde (1) | 0.9 | - | - |
| 1,3-benzènedicarboxaldéhyde (2) | - | - | 1.3 |
| 1,4-benzènedicarboxaldéhyde (3) | - | 1.2 | - |
| Polyphénol : | | | |
| Résorcinol (4) | 1.7 | - | - |
| Morin (5) | - | 1.4 | - |
| Phloroglucide (6) | - | - | 1.3 |
| Hydroxyde de sodium (7) | 0.2 | 0.2 | 0.2 |
| Latex d'élastomères : | | | |
| NR (8) | 6.4 | 6.4 | 6.4 |
| SBR (9) | 3.2 | 3.2 | 3.2 |
| VP-SBR (10) | 6.4 | 6.4 | 6.4 |
| Ammoniaque (11) | 0.5 | 0.5 | 0.5 |
| | | | |
| Poids total d'extrait sec de composition adhésive | 19.3 | 19.3 | 19.3 |
| Poids d'eau | 80.7 | 80.7 | 80.7 |
| | | | |

| **Tests d'adhésion** | | | |
|---|---|---|---|
| Fₘₐₓ à 20°C | 100 | 87 | 92 |
| Fₘₐₓ à 120 °C | 100 | 94 | 95 |

| | | | |
|---|---|---|---|
| (1) Formol (de la société Caldic ; dilué à 36%) ; (2) 1,3-benzènedicarboxaldéhyde (de la société ABCR ; de pureté 98%) ; (3) 1,4-benzènedicarboxaldéhyde (de la société ABCR ; de pureté 98%) ; (4) Résorcinol (de la société Sumitomo ; de pureté 99.5%) ; (5) Morin (de la société Fluka) ; (6) Phloroglucide (de la société Alfa Aesar ; de pureté 95%) ; (7) Hydroxyde de sodium (de la société Aldrich ; dilué à 30%) ; (8) Latex NR (« Trang Latex » de la société Bee tex ; dilué à 61% en poids) ; (9) Latex SBR (« Encord-201 » de la société Jubilant ; dilué à 41% en poids) ; (10) Latex Vinylpyridine-styrène-butadiène («VP 106S» de la société Eliokem ; dilué à 41%) ; (11) Ammoniaque (de la société Aldrich ; diluée à 21%). | | | |

## Revendications

1. Composition adhésive aqueuse, comportant au moins d'une part A) une résine phénol-aldéhyde et d'autre part B) un latex d'élastomère insaturé, **caractérisée en ce que** la résine phénol-aldéhyde est à base d'au moins :
A1) un polyaldéhyde aromatique porteur d'au moins deux fonctions aldéhyde, comprenant au moins un noyau aromatique;
A2) un polyphénol comportant un ou plusieurs noyau(x) aromatique(s), étant entendu que :
o dans le cas d'un seul noyau aromatique, ce dernier est porteur de deux ou trois fonctions hydroxyle en position méta l'une par rapport à l'autre ou les unes par rapport aux autres, le reste du noyau aromatique étant non substitué ;
o dans le cas de plusieurs noyaux aromatiques, au moins deux d'entre eux sont chacun porteur de deux ou trois fonctions hydroxyle en position méta l'une par rapport à l'autre ou les unes par rapport aux autres, étant entendu que les deux positions en ortho d'au moins une de ces fonctions hydroxyle sont non substituées.

2. Composition selon la revendication 1, dans laquelle le noyau aromatique du polyaldéhyde est un noyau benzénique.

3. Composition selon la revendication 1 ou 2, dans laquelle les deux fonctions aldéhyde sont portées par le noyau aromatique.

4. Composition selon la revendication 3, dans laquelle le polyaldéhyde aromatique est choisi dans le groupe constitué par le 1,2-benzène-dicarboxaldéhyde, le 1,3-benzène-dicarboxaldéhyde, le 1,4-benzène-dicarboxaldéhyde, le 2-hydroxybenzène-1,3,5-tricarbaldéhyde et les mélanges de ces composés.

5. Composition selon la revendication 4, dans laquelle le polyaldéhyde est le 1,4-benzènedicarboxaldéhyde.

6. Composition selon l'une quelconque des revendications 1 à 5, dans laquelle le polyphénol est un flavonoïde.

7. Composition selon la revendication 6, dans laquelle le flavonoïde est le 2', 4', 3, 5, 7-pentahydroxyflavone.

8. Composition selon la revendication 6, dans laquelle le polyphénol est le phloroglucide.

9. Composition selon l'une quelconque des revendications de 1 à 8, dans laquelle l'élastomère insaturé du latex est un élastomère diénique, choisi de préférence dans le groupe constitué par les polybutadiènes, les copolymères de butadiène, les polyisoprènes, les copolymères d'isoprène, les terpolymères vinylpyridine-styrène-butadiène et les mélanges de ces élastomères.

10. Matériau textile dont au moins une partie est revêtue d'une couche adhésive comportant une composition adhésive selon l'une quelconque des revendications 1 à 9.

11. Matériau textile selon la revendication 10, choisi dans le groupe constitué par les films, les monofilaments, les fibres multifilamentaires, les assemblages de tels mono filaments ou fibres, et les mélanges de tels matériaux.

12. Matériau textile selon la revendication 10 ou 11, dans lequel la matière du matériau textile est un polymère thermoplastique.

13. Utilisation, pour le collage d'un matériau textile à un caoutchouc insaturé, d'une composition adhésive selon l'une quelconque des revendications 1 à 9.

14. Composite de caoutchouc renforcé d'un matériau textile selon l'une quelconque des revendications 10 à 12.

15. Composite de caoutchouc selon la revendication 14, consistant en un pneumatique.

## Patentansprüche

1. Wässrige Klebstoffzusammensetzung, umfassend mindestens einerseits A) ein Phenol-Aldehyd-Harz und andererseits B) einen Latex eines ungesättigten Elastomers, **dadurch gekennzeichnet, dass** das Phenol-Aldehyd-Harz mindestens auf
A1) einem aromatischen Polyaldehyd mit mindestens zwei Aldehydfunktionen und mindestens einem aromatischen Kern;
A2) einem Polyphenol mit einem oder mehreren aromatischen Kernen, mit der Maßgabe, dass
∘ im Fall eines einzigen aromatischen Kerns letzterer zwei oder drei Hydroxylfunktionen in meta-Position zueinander trägt, wobei der Rest des aromatischen Kerns unsubstituiert ist;
∘ im Fall mehrerer aromatischer Kerne mindestens zwei davon jeweils zwei oder drei Hydroxylfunktionen in meta-Position zueinander tragen, mit der Maßgabe, dass die beiden zu mindestens einer dieser Hydroxylfunktionen ortho-ständigen Positionen unsubstituiert sind;
basiert.

2. Zusammensetzung nach Anspruch 1, wobei es sich bei dem aromatischen Kern des Polyaldehyds um einen Benzolkern handelt.

3. Zusammensetzung nach Anspruch 1 oder 2, wobei sich die beiden Aldehydfunktionen an dem aromatischen Kern befinden.

4. Zusammensetzung nach Anspruch 3, wobei das aromatische Polyaldehyd aus der Gruppe bestehend aus 1,2-Benzoldicarboxaldehyd, 1,3-Benzoldicarboxaldehyd, 1,4-Benzoldicarboxaldehyd, 2-Hydroxybenzol-1,3,5-tricarbaldehyd und Gemischen dieser Verbindungen ausgewählt ist.

5. Zusammensetzung nach Anspruch 4, wobei es sich bei dem Polyaldehyd um 1,4-Benzoldicarboxaldehyd handelt.

6. Zusammensetzung nach einem der Ansprüche 1 bis 5, wobei es sich bei dem Polyphenol um ein Flavonoid handelt.

7. Zusammensetzung nach Anspruch 6, wobei es sich bei dem Flavonoid um 2',4',3,5,7-Pentahydroxyflavon handelt.

8. Zusammensetzung nach Anspruch 6, wobei es sich bei dem Polyphenol um Phloroglucid handelt.

9. Zusammensetzung nach einem der Ansprüche 1 bis 8, wobei es sich bei dem ungesättigten Elastomer des Latex um ein Dienelastomer, das vorzugsweise aus der Gruppe bestehend aus Polybutadienen, Butadien-Copolymeren, Polyisoprenen, Isopren-Copolymeren, Vinylpyridin-Styrol-Butadien-Terpolymeren und Gemischen dieser Elastomere ausgewählt ist, handelt.

10. Textilmaterial, das mindestens teilweise mit einer Klebstoffschicht, die eine Klebstoffzusammensetzung nach einem der Ansprüche 1 bis 9 umfasst, beschichtet ist.

11. Textilmaterial nach Anspruch 10, ausgewählt aus der Gruppe bestehend aus Filmen, Monofilamenten, Multifilamentfasern, Verbänden derartiger Monofilamente oder Fasern und Gemischen derartiger Materialien.

12. Textilmaterial nach Anspruch 10 oder 11, wobei es sich bei der Materie des Textilmaterials um ein thermoplastisches Polymer handelt.

13. Verwendung einer Klebstoffzusammensetzung nach einem der Ansprüche 1 bis 9 zum Verkleben eines Textilmaterials mit einem ungesättigten Kautschuk.

14. Kautschukverbundwerkstoff, verstärkt mit einem Textilmaterial nach einem der Ansprüche 10 bis 12.

15. Kautschukverbundwerkstoff nach Anspruch 14, der aus einem Reifen besteht.

## Claims

1. Aqueous adhesive composition comprising at least, on the one hand, A) a phenol/aldehyde resin and, on the other hand, B) an unsaturated elastomer latex, **characterized in that** the phenol/aldehyde resin is based on at least:
A1) one aromatic polyaldehyde bearing at least two aldehyde functional groups, comprising at least one aromatic nucleus;
A2) one polyphenol comprising one or more aromatic nucleus/nuclei, it being understood that:
o in the case of just one aromatic nucleus, the latter bears two or three hydroxyl functional groups in the meta position with respect to each other or with respect to one another, the remainder of the aromatic nucleus being unsubstituted;
∘ in the case of several aromatic nuclei, at least two of them each bear two or three hydroxyl functional groups in the meta position with respect to each other or with respect to one another, it being understood that the two positions ortho to at least one of these hydroxyl functional groups are unsubstituted.

2. Composition according to Claim 1, in which the aromatic nucleus of the polyaldehyde is a benzene nucleus.

3. Composition according to Claim 1 or 2, in which the two aldehyde functional groups are borne by the aromatic nucleus.

4. Composition according to Claim 3, in which the aromatic polyaldehyde is selected from the group consisting of 1,2-benzenedicarboxaldehyde, 1,3-benzenedicarboxaldehyde, 1,4-benzenedicarboxaldehyde, 2-hydroxybenzene-1,3,5-tricarbaldehyde and the mixtures of these compounds.

5. Composition according to Claim 4, in which the polyaldehyde is 1,4-benzenedicarboxaldehyde.

6. Composition according to any one of Claims 1 to 5, in which the polyphenol is a flavonoid.

7. Composition according to Claim 6, in which the flavonoid is 2',4',3,5,7-pentahydroxyflavone.

8. Composition according to Claim 6, in which the polyphenol is phloroglucide.

9. Composition according to any one of Claims 1 to 8, in which the unsaturated elastomer of the latex is a diene elastomer preferably selected from the group consisting of polybutadienes, butadiene copolymers, polyisoprenes, isoprene copolymers, vinylpyridine/styrene/butadiene terpolymers and the mixtures of these elastomers.

10. Textile material, at least a portion of which is coated with an adhesive layer comprising an adhesive composition according to any one of Claims 1 to 9.

11. Textile material according to Claim 10, selected from the group consisting of films, monofilaments, multifilament fibres, assemblies of such monofilaments or fibres, and mixtures of such materials.

12. Textile material according to 10 or 11, in which the substance of the textile material is a thermoplastic polymer.

13. Use, for the adhesive bonding of a textile material to an unsaturated rubber, of an adhesive composition according to any one of Claims 1 to 9.

14. Rubber composite reinforced with a textile material according to any one of Claims 10 to 12.

15. Rubber composite according to Claim 14, consisting of a tyre.
